# EUROPÄISCHE PATENTSCHRIFT

(11) **EP 3 832 147 B1**
(45) Veröffentlichungstag und Bekanntmachung des Hinweises auf die Patenterteilung: **11.12.2024**
(21) Anmeldenummer: 20210680.3
(22) Anmeldetag: 30.11.2020
(51) Int. Cl.: F16B 5/04, F16B 37/06

(54) **BEFESTIGUNGSELEMENT**
FASTENING ELEMENT
ÉLÉMENT DE FIXATION

(30) Priorität: 05.12.2019 DE 102019133230
(43) Veröffentlichungstag der Anmeldung: 09.06.2021
(73) Patentinhaber: Profil Verbindungstechnik GmbH & Co. KG, 61381 Friedrichsdorf (DE)
(72) Erfinder: DIEHL, Oliver, 61250 Usingen (DE); MAHLME, Amer, 61352 Bad Homburg (DE); JENE, Tobias, 61381 Friedrichsdorf (DE)
(74) Vertreter: Manitz Finsterwald Patent- und Rechtsanwaltspartnerschaft mbB

(56) Entgegenhaltungen:
- EP-A1- 1 068 458
- EP-B1- 1 068 458
- DE-A1- 102006 021 843
- GB-A- 1 244 034
- US-A- 2 562 336
- US-A- 3 355 850

## Beschreibung

Die Erfindung betrifft ein Befestigungselement zur Befestigung an einem Werkstück.

Derartige Elemente dienen beispielweise dazu, ein Objekt an dem Werkstück zu befestigen. Dies ist häufig nicht ohne weiteres direkt möglich, insbesondere wenn die Befestigung lösbar sein soll oder ein stoffschlüssiges Befestigungsverfahren ungeeignet ist. Häufig tritt die Problematik bei flachen oder vergleichsweise dünnen Werkstücken auf, wie etwa Blechteilen, da sie nicht einfach mit einem Loch mit einem belastbaren Innengewinde versehen werden können. Die Lösung für dieses Problem sind u.a. Mutter- oder Bolzenelemente, die in das Blechteil eingebracht werden und die das erforderliche Gewinde zur Befestigung des Objekts aufweisen. Diese Elemente können in vorgelochte Löcher eingebracht werden oder selbststanzend sein.

Besonders problematisch ist es, eine Befestigungsmöglichkeit an Werkstücken zu schaffen, die mehrere Komponenten umfassen, beispielweise zwei parallel beabstandete Blechteile. Einerseits soll die Befestigung aus offensichtlichen Gründen zuverlässig und hinreichend belastbar sein. Andererseits muss oftmals gewährleistet sein, dass der Abstand zwischen den Komponenten durch den Befestigungsprozess nicht verringert wird.

Die US 3 355 850 A offenbart ein Befestigungselement mit den Merkmalen des Oberbegriffs des Anspruchs 1.

Es ist eine Aufgabe der vorliegenden Erfindung, ein Befestigungselement zu schaffen, dass sich auf einfache Weise zuverlässig an solch einem Werkstück befestigen lässt.

Diese Aufgabe wird durch ein Befestigungselement mit den Merkmalen des Anspruchs 1 gelöst.

Erfindungsgemäß ist das Befestigungselement geeignet und dazu ausgebildet, an einem Werkstück befestigt zu werden, dass zumindest ein erstes Werkstückelement mit einer ersten Öffnung und ein zweites Werkstückelement mit einer mit der ersten Öffnung fluchtenden zweiten Öffnung umfasst. Die Werkstückelemente können beispielsweise Blechteile oder Bauteile aus einem Faserverbundwerkstoff sein.

Das Befestigungselement weist einen ersten Anlageabschnitt mit einer erste Anlagefläche zur Anlage an einem die erste Öffnung umgebenden Bereichs des ersten Werkstückelements und einen zweiten Anlageabschnitt mit einer zweite Anlagefläche zur Anlage an einem die zweite Öffnung umgebenden Bereich des zweiten Werkstückelements auf. Der Anlagebereich des zweiten Werkstückelements ist dem ersten Werkstückelement zugewandt und das erste und das zweite Werkstückelement sind zumindest in den die erste und die zweite Öffnung umgebenden Bereichen beabstandet, insbesondere parallel beabstandet voneinander angeordnet.

Der erste Anlageabschnitt und der zweite Anlageabschnitt sind mittels eines sich in einer Längsrichtung des Befestigungselements erstreckenden Umformabschnitts miteinander verbunden. Außerdem ist ein Nietabschnitt vorgesehen, der sich von dem zweiten Anlageabschnitt in einer von dem Umformabschnitt abgewandten Richtung erstreckt.

Das Befestigungselement wird bei dem Befestigungsprozess in die Öffnungen des Werkstücks eingebracht und im Bereich des Umformabschnitts und des Nietabschnitts umgeformt, um zwei formschlüssige Verbindungen zu schaffen: Einerseits wird das erste Werkstückelement zwischen der ersten Anlagefläche und einem umgeformten Abschnitt des Umformabschnitts geklemmt, andererseits wird das zweite Werkstückelement zwischen der zweiten Anlagefläche und einem umgeformten Abschnitt des Nietabschnitts geklemmt. Der Umformabschnitt ist dabei insbesondere so ausgestaltet, dass der Abstand zwischen den beiden Werkstückelementen auch nach dem Befestigungsvorgang im Wesentlichen so erhalten bleibt, wie er vor dem Einbringen des Befestigungselements vorlag. Es ist aber auch möglich, dass dieser Abstand durch den Befestigungsprozess erst "eingestellt", insbesondere um einen bestimmten Betrag verringert wird.

Der Umformabschnitt überbrückt letztlich den Abstand zwischen den beiden Werkstückelementen und wirkt - bei geeigneter Auslegung - gleichsam als Abstandhalter. Das Befestigungselement kann daher in einem montierten Zustand auch eine das Werkstück stabilisierende Wirkung haben.

Bevorzugt ist das Befestigungselement zumindest teilweise, bevorzugt vollständig aus Metall. Der Einsatz anderer Materialien, zum Beispiel eines Kunststoffs, ist ebenfalls möglich. Insbesondere ist das Befestigungselement einteilig bzw. einstückig ausgebildet.

Es kann vorgesehen sein, dass die Längserstreckung des Umformabschnitts in einem Zustand des Befestigungselements vor dessen Einsatz etwas größer als der gewünschte Abstand zwischen den Werkstückelementen ist, da dessen Umformung in der Regel mit einer Stauchung in axialer Richtung einhergeht.

Weitere Ausführungsformen der Erfindung sind in den Ansprüchen, der Beschreibung und den beigefügten Zeichnungen angegeben.

Gemäß einer Ausführungsform sind der Umformabschnitt und/oder der Nietabschnitt in einem Querschnitt senkrecht zu der Längsrichtung im Wesentlichen symmetrisch, insbesondere kreisförmig ausgebildet. Diese Bauform erleichtert das Einbringen des Elements in das Werkstück und verringert die Herstellungskosten des Befestigungselements. Asymmetrische und/oder polygonalen Querschnittsformen können in besonderen Fällen jedoch ebenfalls vorgesehen sein. Bei nicht kreisförmigen Querschnitten des Umform- und/oder Nietabschnitts ergibt sich eine Verdrehsicherung des Elements schon allein aufgrund deren Querschnittsform.

Der Umformabschnitt und/oder der Nietabschnitt können koaxial angeordnet sein.

Gemäß einer konstruktiv einfachen und kompakten Ausführungsform ist der zweite Anlageabschnitt an einem dem ersten Anlageabschnitt abgewandten axialen Ende des Umformabschnitts ausgebildet. Insbesondere ist die zweite Anlagefläche an dem genannten Ende des Umformabschnitts angeordnet.

Ein Außenumfang des Nietabschnitts kann kleiner sein als ein Außenumfang des Umformabschnitts, um das Einbringen des Befestigungselements in das Werkstück zu vereinfachen. Alternativ oder zusätzlich kann eine Längserstreckung des Nietabschnitts kleiner sein als eine Längserstreckung des Umformabschnitts. In der Regel ist nämlich ein vergleichsweise kurzer Nietabschnitt ausreichend, um durch dessen Umformung eine zuverlässige Verbindung mit dem ihm zugeordneten zweiten Werkstückelement herzustellen. Die Längserstreckung des Umformabschnitts wird dahingegen durch den zu erhaltenden Abstand der Werkstückelemente vorgegeben.

Ein freies Ende des Nietabschnitts kann angefast sein, um das Eindringen einer zu seiner Umformung vorgesehenen Matrize zu erleichtern.

Der Umformabschnitt weist eine Umformeinrichtung auf, die derart ausgestaltet ist, dass eine in axialer Richtung wirkende Kraft in eine Aufweitung des Umformabschnitts umsetzbar ist, insbesondere wobei die Umformeinrichtung eine Schwächezone aufweist. Die Umformeinrichtung soll insbesondere sicherstellen, dass sich der Umformabschnitt zur Klemmung des Befestigungselements an dem ersten Werkstückelement in einer wohldefinierten Weise umgeformt wird. Eine Schwächezone kann festlegen, wo die Umformung beginnt und ihren Verlauf beeinflussen.

Der Umformabschnitt weist einen sich in Längsrichtung erstreckenden Hohlraum auf. Der erste Anlageabschnitt, der zweite Anlageabschnitt und/oder der Nietabschnitt können ebenfalls einen sich in Längsrichtung erstreckenden Hohlraum aufweisen. Der jeweilige Hohlraum kann den ihm zugeordneten Abschnitt durchqueren, beispielsweise kann er eine Durchgangsbohrung sein. Wenn zwei oder mehrere der Abschnitte einen Hohlraum aufweisen, so können diese miteinander verbunden sein und/oder miteinander fluchten.

Die Umformeinrichtung ist in dem Hohlraum des Umformabschnitts angeordnet. Sie umfasst eine Stufe, die zur Aufweitung des Umformabschnitts mit einem Stempel einer Setzeinrichtung zusammenwirkt.

Der Hohlraum oder die Hohlräume können zumindest abschnittsweise zylindrisch ausgebildet sein und/oder zumindest abschnittsweise ein Innengewinde aufweisen.

Gemäß einer Ausführungsform ist die Wandstärke des Umformabschnitts in Längsrichtung nicht konstant sondern variiert. Beispielsweise weist ein sich in Längsrichtung erstreckender Hohlraum des Umformabschnitts - in einem die Längsachse des Befestigungselements enthaltenden Längsschnitt gesehen - zumindest eine Stufe und/oder eine Schräge auf. Die Ausgestaltung des Hohlraums kann so gewählt werden, dass er die Umformeinrichtung (oder einen Teil davon) bildet.

Die erste und/oder die zweite Anlagefläche können ringförmig sein. Andere Formgebungen aber auch denkbar.

Von großer Bedeutung ist in den meisten Anwendungsfällen, dass das Befestigungselement zuverlässig an dem Werkstück fixiert ist. Zum einen geht es dabei um eine Fixierung in axialer Richtung, was durch eine Umformung des Umformabschnitts und des Nietabschnitts bewirkt wird. Zum anderen soll sich das Befestigungselement aber auch nicht relativ zu dem Werkstück drehen lassen können. Um eine Verdrehsicherung zu erzielen, können die erste und/oder die zweite Anlagefläche zumindest ein Verdrehsicherungsmerkmal aufweisen, insbesondere eine oder mehrere sich in radialer Richtung erstreckende Rippen. Es kann auch vorgesehen sein, dass die erste und/oder die zweite Anlagefläche zumindest eine Vertiefung umfassen, in die beim Befestigungsprozess Material des jeweiligen Werkstückelements gedrängt wird. Eine solche Vertiefung kann eine Ringnut sein. Die vorstehend erwähnten radialen Rippen können beispielsweise diese Ringnut überbrücken, um eine Mehrzahl von verdrehsichernden Vertiefungen zu schaffen.

Verdrehsicherungsmerkmale (eines oder mehrere) können auch an einer Außenseite des Umformabschnitts und/oder an einer Außenseite des Nietabschnitts vorgesehen sein, beispielsweise in der Form von sich in axialer Richtung erstreckender Rippen.

Gemäß einer herstellungstechnisch einfachen Ausführungsform ist das Befestigungselement einstückig ausgebildet. Es ist aber durchaus auch denkbar, dieses mehrstückig auszubilden. Beispielsweise kann das Befestigungselement ein erstes Bauteil umfassen, das durch den ersten Anlageabschnitt und einen ersten Teil des Umformabschnitts gebildet ist. Das zweite Bauteil würde dann einen zweiten Teil des Umformabschnitts, den zweiten Anlageabschnitt und den Nietabschnitt umfassen. Der erste und der zweite Teil des Umformabschnitts können jeweils einen zugeordneten Kopplungsabschnitt aufweisen, der es ermöglicht, die beiden Teile ineinander zu stecken. Durch eine geeignete geometrische Ausgestaltung der Kopplungsabschnitte (z.B. komplementäre Schrägen) kann eine Umformeinrichtung bereitgestellt werden, durch die eine axiale Belastung der Kopplungsabschnitte in eine Umformung, insbesondere Aufweitung des Umformabschnitts umgewandelt wird.

Das Befestigungselement kann ein Mutterelement oder ein Bolzenelement sein.

Die vorliegende Erfindung betrifft ferner ein Zusammenbauteil, umfassend ein Werkstück, das zumindest ein erstes Werkstückelement mit einer ersten Öffnung und ein zweites Werkstückelement mit einer mit der ersten Öffnung fluchtenden zweiten Öffnung umfasst, wobei das erste und das zweite Werkstückelement zumindest in einem jeweiligen die erste und die zweite Öffnungen umgebenden Bereich beabstandet, insbesondere parallel beabstandet voneinander angeordnet sind und wobei der Bereich des zweiten Werkstückelements dem ersten Werkstückelement zugewandt ist. Das Zusammenbauteil umfasst außerdem zumindest ein Befestigungselement, insbesondere gemäß einer der vorstehend beschriebenen Ausführungsformen, mit einem ersten Anlageabschnitt mit einer erste Anlagefläche zur Anlage an dem die erste Öffnung umgebenden Bereich des ersten Werkstückelements und mit einem zweiten Anlageabschnitt mit einer zweite Anlagefläche zur Anlage an dem die zweite Öffnung umgebenden Bereich des zweiten Werkstückelements. Der der erste Anlageabschnitt und der zweite Anlageabschnitt sind mittels eines sich in einer Längsrichtung des Befestigungselements erstreckenden Umformabschnitts miteinander verbunden. Von dem zweiten Anlageabschnitt erstreckt sich in einer von dem Umformabschnitt abgewandten Richtung ein Nietabschnitt.

Der Umformabschnitt ist zumindest abschnittsweise derart aufgeweitet, dass das erste Werkstückelement zwischen der ersten Anlagefläche und der Aufweitung des Umformabschnitts geklemmt ist. Der Nietabschnitt ist zumindest abschnittsweise derart aufgeweitet, dass das zweite Werkstückelement zwischen der zweiten Anlagefläche und der Aufweitung des Nietabschnitts geklemmt ist.

Gemäß einer Ausführungsform des Zusammenbauteils ist der Nietabschnitt derart aufgeweitet, dass das zweite Werkstückelement verdrehsicher zwischen der zweiten Anlagefläche und der Aufweitung des Nietabschnitts geklemmt ist. Die Klemmung zwischen der ersten Anlagefläche und der Aufweitung des Umformabschnitts kann derart ausgestaltet sein, dass das erste Werkstückelement gegenüber dem fest mit dem zweiten Werkstückelement verbundenen Befestigungselement verdrehbar ist. Die Aufweitung des Umformabschnitts ist dabei hinreichend groß, dass das zweiten Werkstückelement in axialer Richtung des Befestigungselement gesehen an diesem verliersicher befestigt ist. Auch eine hinsichtlich der beiden Klemmungen umgekehrte Ausgestaltung des Zusammenbauteils ist denkbar.

Alternativ zu der vorstehend beschriebenen Ausführungsform des Zusammenbauteils können auch beide Klemmungen derart ausgestaltet sein, dass sie eine verdrehbare oder eine verdrehsichere Befestigung des jeweiligen Werkstücks an dem Befestigungselements bewirken.

Gemäß einer Ausführungsform ist die zweite Öffnung kleiner als die erste Öffnung.

Der Abstand des die erste Öffnung umgebenden Bereichs des ersten Werkstückelements von dem die zweite Öffnung umgebenden Bereichs des zweiten Werkstückelements kann kleiner sein als eine Längserstreckung des Umformabschnitts vor Befestigung des Befestigungselements an dem Werkstück.

Ein weiterer Aspekt der vorliegenden Erfindung betrifft ein Verfahren zur Herstellung eines Zusammenbauteils gemäß einer der vorstehend beschriebenen Ausführungsformen. Das Befestigungselement wird mittels einer Setzeinrichtung durch eine Setzbewegung, die zumindest eine ersten Bewegungsphase und eine zweite Bewegungsphase umfasst, in Längsrichtung des Befestigungselements zunächst in die Öffnung des ersten Werkstückelements und anschließend in die Öffnung des zweiten Werkstückelements eingebracht. Der Nietabschnitt wirkt während der ersten Bewegungsphase mit einer Matrize zusammen, um den Nietabschnitt aufzuweiten, wobei die Matrize auf der dem ersten Werkstückelement abgewandten Seite des zweiten Werkstückelements angeordnet ist. Während der zweiten Bewegungsphase wird eine Aufweitung des Umformabschnitts bewirkt, insbesondere wobei die Aufweitung durch eine axiale Stauchung des Umformabschnitts bewirkt wird.

Die Aufweitung des Umformabschnitts und die Aufweitung des Nietabschnitts können zeitlich versetzt erfolgen und/oder die erste und die zweite Bewegungsphase können zeitlich versetzt sein.

Insbesondere sind die erste und die zweite Bewegungsphase derart aufeinander abgestimmt, dass die Aufweitung des Umformabschnitts erst einsetzt, nachdem die Aufweitung des Nietabschnitts begonnen hat. D.h. die zweite Bewegungsphase beginnt erst nach dem Beginn der ersten Bewegungsphase. In bestimmten Fällen kann es vorteilhaft sein, wenn die zweite Bewegungsphase zum Ende der ersten Bewegungsphase hin oder sogar erst nach deren Abschluss einsetzt.

Es ist auch denkbar, die erste und die zweite Bewegungsphase derart aufeinander abzustimmen, dass die Aufweitung des Umformabschnitts erst einsetzt, nachdem die zweite Anlagefläche in Anlage mit dem die zweite Öffnung umgebenden Bereichs des zweiten Werkstückelements gebracht wurde.

Die erste und die zweite Bewegungsphase können ineinander übergehen oder sich teilweise oder vollständig überlappen.

Um die Setzbewegung zu vereinfachen, können die erste und die zweite Bewegungsphase koaxiale Bewegungen sein und/oder eine gleiche Bewegungsrichtung aufweisen.

Gemäß einer Ausführungsform des Verfahrens weist die Setzeinrichtung einen Stempel auf, der in einen sich in Längsrichtung erstreckenden Hohlraum des Umformabschnitts ragt und der zur Aufweitung des Umformabschnitts mit einer Umformeinrichtung zusammenwirkt.

Die Umformeinrichtung kann zumindest eine Stufe umfassen, die zur Aufweitung des Umformabschnitts mit dem Stempel zusammenwirkt, insbesondere über eine an dem Stempel ausgebildete Schräge oder konisch geformten Stempelfläche. Eine relative Bewegung des Stempels und des Umformabschnitts bewirkt, dass die Stufe durch das Auflaufen an der Schräge oder der konischen Stempelfläche in radialer Richtung nach außen gedrängt wird. Dies hat letztlich zur Folge, dass damit der Umformabschnitt aufgeweitet wird. Eine Ausgestaltung der Umformeinrichtung als Stufe ist mit dem Vorteil verbunden, dass zwischen einer durch die Stufe gebildeten Kante und der Stempelfläche ein Linienkontakt vorliegt, der einerseits nur eine vergleichsweise geringe Reibung verursacht, andererseits aber eine gute Kraftumsetzung sicherstellt.

Der Stempel kann starr angeordnet sein oder relativ zu einem mit dem ersten Anlageabschnitt zusammenwirkenden Abschnitt der Setzeinrichtung in Längsrichtung des Befestigungselements verfahren werden, um die zweite Bewegungsphase zu bewirken.

Die Ausgestaltung der zweiten Bewegungsphase hat Auswirkungen auf die Art der Klemmung des ersten Werkstückelements an dem Befestigungselement. Der Betrag der axialen Stauchung des Umformabschnitts und/oder - falls vorgesehen - die Eindringtiefe und/oder Ausgestaltung des Stempels und die Art von dessen Zusammenwirken mit der Umformeinrichtung kann zu einer Aufweitung des Umformabschnitts führen, die das erste Werkstück zwar an dem Befestigungselement sichert, die aber eine relative Verdrehung der beiden Komponenten zulässt. Vereinfacht gesagt führt eine weniger starke Klemmung zu einer Ausgestaltung der Verbindung, bei der das Befestigungselement als Drehpunkt für das erste Werkstück wirkt, die aber gleichzeitig das erste Werkstück an dem Befestigungselement (in axialer Richtung des Befestigungselements gesehen) sicher. Alternativ kann aber auch eine verdrehsichere Klemmung des ersten Werkstücks an dem Befestigungselement realisiert werden.

Analoges gilt für die erste Bewegungsphase bzw. für die Ausgestaltung der Matrize und die dadurch erzeugte Klemmung des zweiten Werkstücks an dem Befestigungselement durch Aufweitung des Nietabschnitts.

Nachfolgend wird die vorliegende Erfindung rein beispielhaft anhand vorteilhafter Ausführungsformen unter Bezugnahme auf die beigefügten Zeichnungen erläutert. Es zeigen:
- Fig. 1 und 2: eine erste Ausführungsform des erfindungsgemäßen Befestigungselement jeweils in einer Perspektivansicht,
- Fig. 3: das Befestigungselement gemäß der ersten Ausführungsform in einer axialen Ansicht,
- Fig. 4: das Befestigungselement gemäß der ersten Ausführungsform in einem Längsschnitt bzw. in einer Seitenansicht,
- Fig. 5 und 6: den Vorgang des Einbringens des Befestigungselements gemäß der ersten Ausführungsform in ein Werkstück,
- Fig. 7: das Befestigungselement gemäß der ersten Ausführungsform in einem an dem Werkstück fixierten Zustand (Zusammenbauteil),

- Fig. 8: das Befestigungselement gemäß der zweiten Ausführungsform, die nicht zur Erfindung gehört, in einer axialen Ansicht,
- Fig. 9: das Befestigungselement gemäß der zweiten Ausführungsform in einem Längsschnitt bzw. in einer Seitenansicht,
- Fig. 10 und 11: den Vorgang des Einbringens des Befestigungselements gemäß der zweiten Ausführungsform in ein Werkstück und
- Fig. 12: das Befestigungselement gemäß der zweiten Ausführungsform in einem an dem Werkstück fixierten Zustand (Zusammenbauteil).

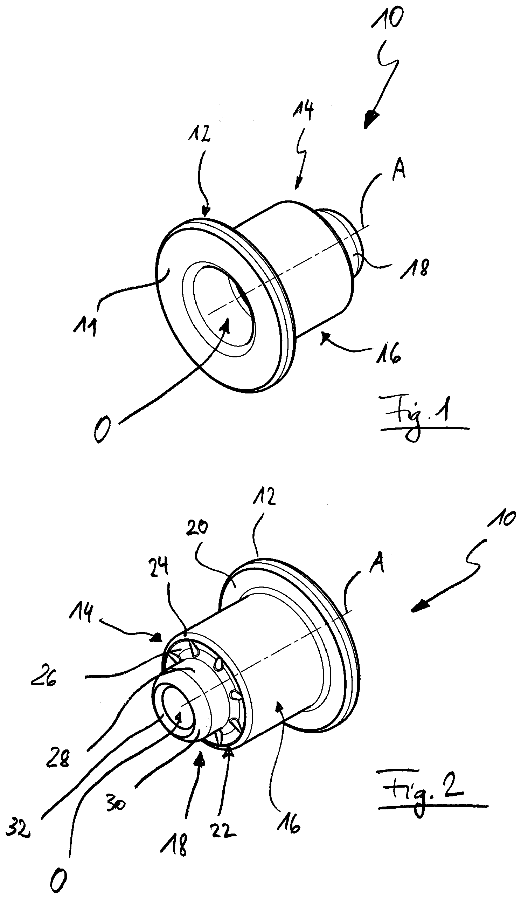

Fig. 1 und 2 zeigen eine erste Ausführungsform 10 des erfindungsgemäßen Befestigungselements. Das Element 10 weist ein zentrale Öffnung O auf und ist - hier beispielhaft - rotationssymmetrisch um eine Längsachse A ausgebildet und umfasst einen flanschartigen ersten Anlageabschnitt 12 und einen zweiten Anlageabschnitt 14. Zwischen den Anlageabschnitten 12, 14 erstreckt sich ein Umformabschnitt 16. Von dem Anlageabschnitt 14 erstreckt sich ein Nietabschnitt 18 in einer Richtung, die dem Umformabschnitt 16 abgewandt ist.

Eine dem Umformabschnitt 16 zugewandte Anlagefläche 20 des Anlageabschnitts 12 dient zur Anlage an einer ersten Komponente eines Werkstücks. Die Anlagefläche 20 ist ringförmig und im Wesentlichen eben ausgestaltet. Anders als gezeigt kann sie auch mit Erhebungen und/oder Vertiefungen versehen sein, die bei Anlage an der genannten Komponente einem Verdrehen des Elements 10 entgegenwirken. An der der Anlagefläche 20 entgegengesetzten Seite des Anlageabschnitts 12 ist eine Flanschfläche 11 angeordnet, die bei einem Setzvorgang mit einer nicht gezeigten Setzeinrichtung zusammenwirkt.

Die Außenfläche des Umformabschnitts 16 weist eine zylindrische Grundform auf. Bei Bedarf kann diese ebenfalls mit Verdrehsicherungsmerkmalen versehen sein, die mit Wänden eines Lochs in der ersten Werkstückkomponente zusammenwirken. Solche Verdrehsicherungsmerkmale können beispielsweise Rippen (nicht gezeigt) sein, die sich in axialer Richtung des Umformabschnitts 16 erstrecken.

An dem dem Anlageabschnitt 12 abgewandten axialen Ende des Umformabschnitts 16 ist der Anlageabschnitt 14 angeordnet, der - wie der Anlageabschnitt 12 - im Wesentlichen ringförmig ist und eine Anlagefläche 22 zur Anlage an einer zweiten, von der ersten Komponente beabstandet angeordneten zweiten Komponente des Werkstücks. Um das Einführen des Umformabschnitts16 in ein Loch der ersten Komponente des Werkstücks zu erleichtern, ist der Umformabschnitt 16 mit einer (gekrümmten) Fase 24 versehen. Die Anlagefläche 22 weist eine Ringnut 26 auf, die von sich in radialer Richtung erstreckenden Rippen 27 überbrückt wird. Die Rippen 28 sind vorzugsweise in Umfangsrichtung gleichmäßig verteilt. Es versteht sich, dass die in Bezug auf die Anlagefläche 22 beschriebenen Merkmale auch an der Anlagefläche 20 vorhanden sein können (und umgekehrt), falls es im jeweils vorliegenden Anwendungsfall erforderlich sein sollte.

Der Nietabschnitt 18 weist einen zylindrischen Grundkörper 28 auf, der zu dem freien Enden des Nietabschnitts 18 hin in einen gekrümmten Endabschnitt 30 übergeht. Der Endabschnitt 30 kann auch eine Schräge aufweisen. Der Endabschnitt 30 bildet eine Einführhilfe zum Einbringen des Nietabschnitts 18 in ein Loch der zweiten Werkstückkomponente. Um die Öffnung O ist das freie Ende des Nietabschnitts 18 mit einer Fase 32 versehen, um das Einführen einer nicht gezeigten Matrize in den Nietabschnitt 18 zu erleichtern.

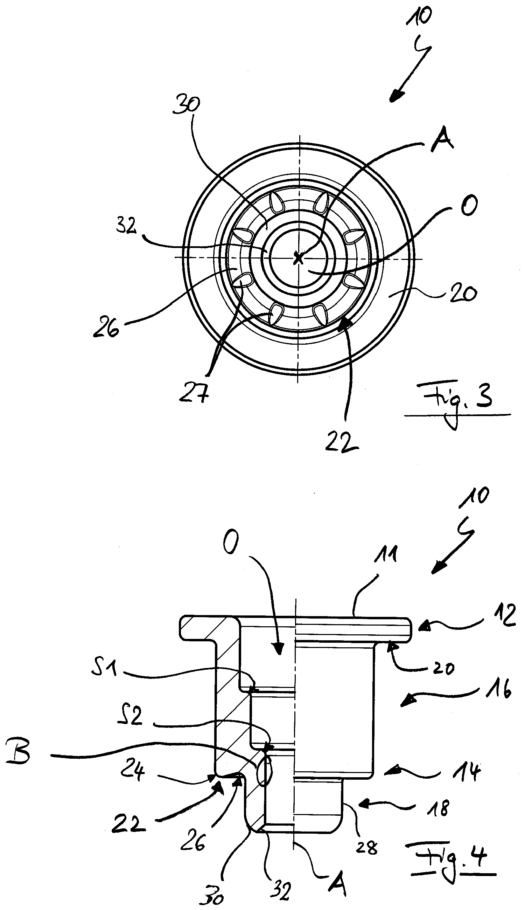

Fig. 3 zeigt das Element 10 in einer axialen Ansicht mit Blick auf die Anlageflächen 20, 22, wodurch die rotationssymmetrische Ausgestaltung des Elements 10 gut zu erkennen ist. Grundsätzlich können die Anlageflächen 20, 22, der Umformabschnitt 16 und/oder der Nietabschnitt 18 andere Konturen bzw. Querschnitte aufweisen, z.B. ovale oder polygonalen Konturen bzw. Querschnitte.

Fig. 4 zeigt einen Längsschnitt (links der Achse A) bzw. eine Seitenansicht (rechts der Achse A) des Elements 10. In dem Längsschnitt ist zu erkennen, dass die zentrale Öffnung O keinen konstanten Durchmesser aufweist. Sie weist zwei Stufen S1, S2 auf, wodurch der Durchmesser vom Anlageabschnitt 12 aus gesehen abnimmt. Beispielsweise in einem Bereich B unterhalb der Stufe S2 kann ein Innengewinde vorgesehen sein, das zur Verbindung mit einem Objekt dienen kann, das mit dem Werkstück gekoppelt werden soll.

Die Öffnung O kann auch als eine Kombination mehrerer, miteinander in Verbindung stehender und miteinander fluchtender Hohlräume der Abschnitte 12, 14, 16, 18 angesehen werden, die jeweils nicht zwingend einen konstanten Durchmesser aufweisen müssen.

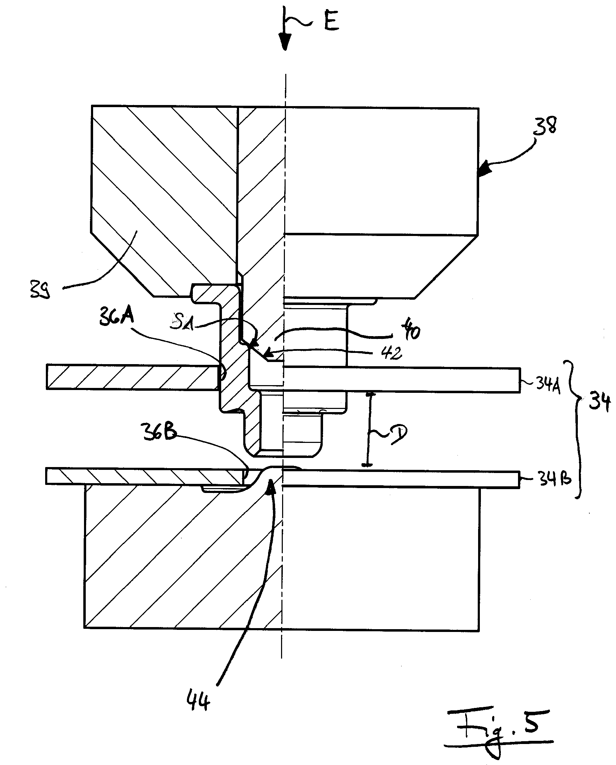

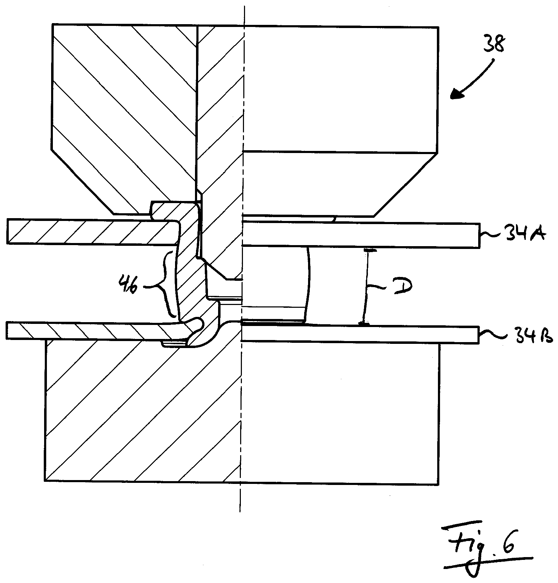

Anhand der Fig. 5 und 6 wird nun verdeutlicht, wie das Element 10 an einem Werkstück 34 befestigt wird. Das Werkstück 34 umfasst zwei Komponenten 34A, 34B, die im vorliegenden Beispiel unterschiedlich dick sind und parallel beanstandet voneinander angeordnet sind. Es versteht sich, dass die Komponenten 34A, 34B grundsätzlich beliebig ausgestaltet sein können. Im Kontext der vorliegenden Erfindung ist lediglich wesentlich, dass sie in Bereichen um Löcher 36A, 36B in den Komponenten 34A bzw. 34B, die das Element 10 aufnehmen, nicht direkt aneinander anliegen, sondern dass zwischen den Bereichen ein Abstand D vorliegt. Auch das Material der Komponenten 34A, 34B kann frei gewählt werden.

Mit Hilfe einer Setzeinrichtung 38, die mittels eines Setzkopfes 39 an der Flanschfläche 11 angreift und einen fest mit dem Setzkopf 39 verbundenen Stempel 40 aufweist, der in die Öffnung O ragt, wird das Element 10 in einer geradlinigen Setzbewegung E zunächst in das Loch 36A eingeführt. Eine konisch geformte Stempelfläche 42 liegt dabei an der Stufe S1 an. Zunächst findet keine Verformung des Elements 10 statt.

Schließlich dringt das freie Ende des Nietabschnitts 18 in einen Spalt zwischen dem Rand des Lochs 36B und einer zur Umformung des Nietabschnitts 18 vorgesehenen Matrize 44 ein. Das Einführen des Nietabschnitts 18 in das Loch 36B wird durch die Ausgestaltung des Endabschnitts 30 begünstigt. Die Fase 32 wiederum erleichterte das Eindringen der Matrize 44 in das untere Ende der Öffnung O.

Sobald der Nietabschnitt 18 mit der Matrize 44 im Zuge der Setzbewegung E in Kontakt gerät, beginnt dessen Umformung. Er wird durch die Formgebung der Matrize 44 nach außen umgebogen und hintergreift so das Werkstück 34B. Bei einem Fortschreiten der Setzbewegung E kommt die Anlagefläche 22 in einem Bereich um das Loch 36B in Kontakt mit der der Werkstückkomponente 34A zugewandten Oberfläche der Werkstückkomponente 36B (siehe Fig. 6). Die Setzbewegung E führt also letztlich dazu, dass sich der Nietabschnitt 18 auf der Matrize abstützt, während die Anlagefläche 22 von oben gegen die Komponente 34B gedrückt wird, so dass der Bereich um das Loch 36B in die Ringnut 26 gedrückt wird.

Die Setzbewegung E führt jedoch nicht nur zu einer Umformung des Nietabschnitts 18, sondern auch zu einer Aufweitung des Umformabschnitts 16. Wann diese einsetzt hängt - neben den Eigenschaften des Materials des Elements 10 - auch von dessen geometrischer Ausgestaltung ab. Sobald nämlich der Nietabschnitt 18 mit der Matrize 44 zusammenwirkt, tritt eine Kraft auf, die der Setzbewegung E entgegenwirkt. Dann wirkt die konische Stempelfläche 42 mit der Stufe S1 zusammen und drängte diese bei Fortschreiten der Bewegung E nach außen, wodurch der Umformabschnitt 18 ausgebuchtet wird. Durch diese Ausbuchtung 46, die in Fig. 6 gut zu sehen ist, entsteht eine Klemmverbindung. Mit anderen Worten wird die Werkstückkomponente 34A zwischen der Anlagefläche 20 und der Ausbuchtung 46 geklemmt. Die Setzbewegung E findet ihren Abschluss, wenn die gewünschte axiale Stauchung des Umformabschnitts 16 erreicht wurde und die Anlagefläche 20 an der Oberfläche der Komponente 34A sicher anliegt. Die Setzeinrichtung 38 kann dann entfernt werden.

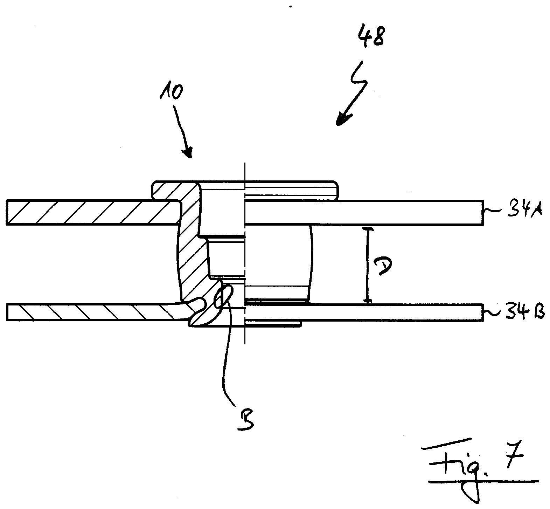

Das Resultat des vorstehend beschriebenen Setzprozesses, nämlich ein Zusammenbauteil 48 umfassend das Werkstück 34 mit den Komponenten 34A, 34B und das daran zuverlässig befestigte Element 10, ist in Fig. 7 gezeigt. Es ist zu erkennen, dass der Setzprozess zu keiner wesentlichen Änderung des Abstand D geführt hat. An dem Werkstück 34 kann nun auf einfache Weise ein Objekt befestigt werden, beispielsweise mittels eines Bolzens. Das Element 10 wirkt durch die Ausbuchtung 46 und die Abstützung des Umformabschnitts 16 auf der Werkstücckomponente 34B als stabilisierender Abstandshalter.

Da der Umformabschnitt 16 während des Setzprozesses in axialer Richtung gestaucht wird, ist der Abstand zwischen den Flächen 20, 22 bei einem undeformierten Element 10 etwas größer als der Abstand D. Dieses Übermaß entspricht der axialen Stauchung. Grundsätzlich ist es auch möglich, kein Übermaß oder sogar ein Untermaß vorzusehen, falls bewusst eine Verringerung des Abstands D im Bereich der Löcher 36 A, 36B erzielt werden soll.

Wann die Erzeugung der Ausbuchtung 46 einsetzt und wie stark sie sich ausbildet hängt unter anderem von der Geometrie der Matrize, der Amplitude der Setzbewegung E, der Stabilität oder Wandstärke des Umformabschnitts 16 und der Ausgestaltung der Stufe S1 und der Stempelfläche 42 ab. Diese Parameter sind frei wählbar und können an die jeweils vorliegenden Anforderungen angepasst werden. Entscheidend ist, zu welchem Zeitpunkt die der Setzbewegung E entgegen gerichtete Kraft so groß ist, dass die durch das Zusammenwirken der Stempelfläche 42 mit der Stufe S1 erzeugte radiale Kraft die Stabilität der Wand des Abschnitts 16 übersteigt, so dass dessen Aufweitung einsetzt. Dieser Zeitpunkt kann erreicht sein, sobald eine Umformung des Nietabschnitts 18 einsetzt oder ein gewisser Umformgrad des Nietabschnitts 18 erreicht ist, beispielsweise sobald er die Komponente34B hinreichend hintergreift, so dass eine axiale Abstützung sichergestellt ist. Es kann aber auch der Zeitpunkt sein, an dem die Anlagefläche 22 in Kontakt mit der Oberfläche der Komponente 34B tritt. Das Element 10 kann auch so ausgestaltet sein, dass die beiden Bedingungen im Wesentlichen zeitgleich eintreten. Die Umformung des Umformabschnitts 18 kann auch erst einsetzen, wenn die Umformung des Nietabschnitts 16 bereits im Wesentlichen abgeschlossen ist.

Anders formuliert: Der Setzprozess umfasst zumindest zwei Phasen, die einerseits der Umformung des Nietabschnitts 18 (Phase P1) und andererseits der Aufweitung des Umformabschnitts 16 (Phase P1) zugeordnet sind. Diese beiden Phasen können zeitlich getrennt sein, ineinander übergehen oder sich zumindest teilweise überlappen. Im vorstehend beschriebenen Beispiel überlappen sich die Phasen P1, P2. Die Phase P1 beginnt vor der Phase P2, die aber nach der Phase P1 endet. Die Setzbewegung E ist dabei im vorliegenden Beispiel eine kontinuierliche lineare Bewegung. Es ist aber denkbar, eine zeitlich variierende Bewegung E vorzusehen. Auch die Verwendung eines relativ zu dem Setzkopf 39 beweglichen Stempels 40 ist denkbar, der die Verformung des Umformabschnitts 16 durch eine Eigenbewegung erzeugt, z.B. durch eine Stoßbewegung nach Abschluss einer Umformung des Nietabschnitts 18.

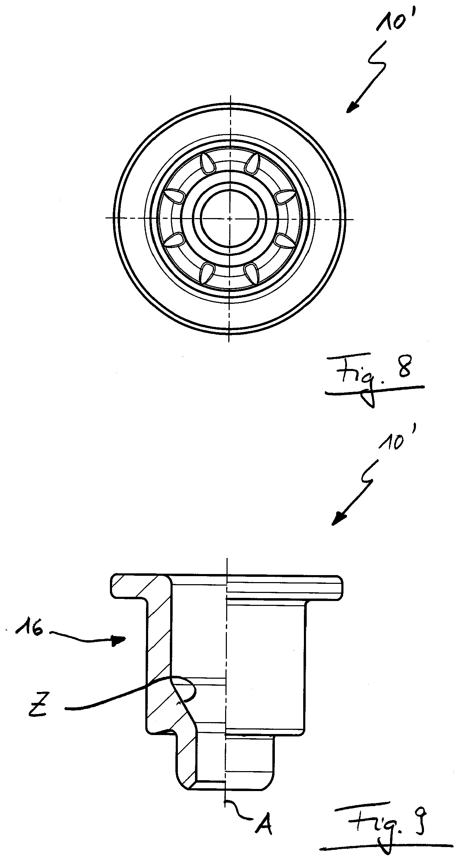

Anhand der nachfolgenden Figuren 8 bis 12 wird eine weitere Ausführungsform 10' des Befestigungselements beschrieben. Äußerlich gleicht es dem Element 10' weshalb auf Perspektivansichten verzichtet wird. Auch in der axialen Ansicht (vgl. Fig. 8) gibt es keine entscheidenden Unterschiede.

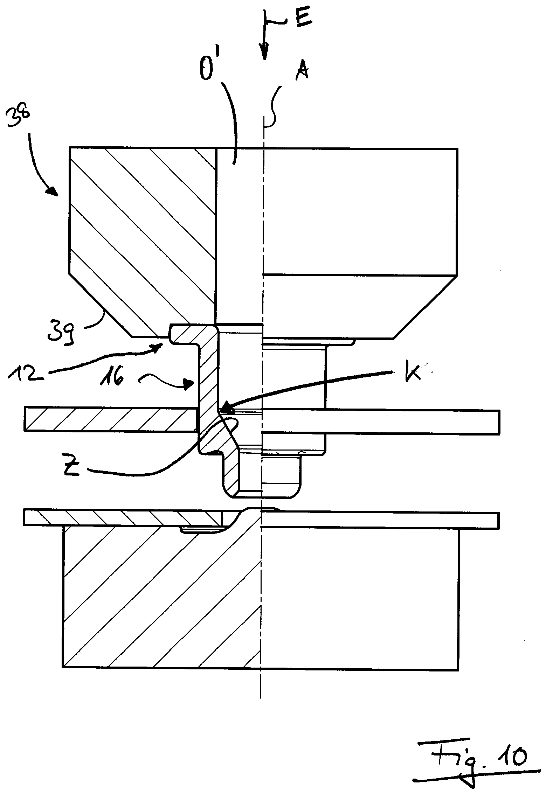

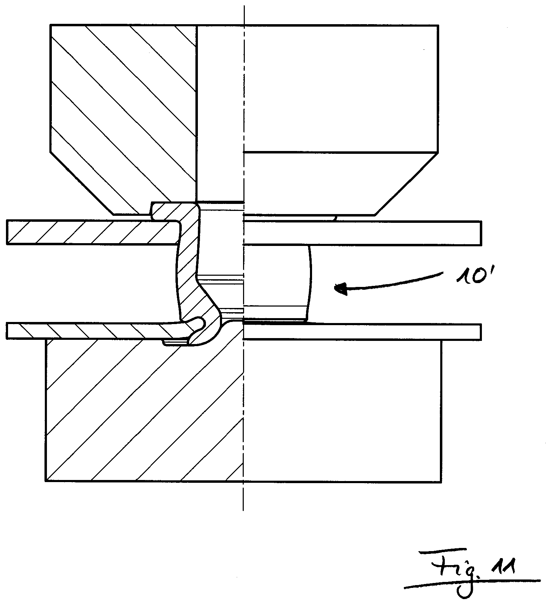

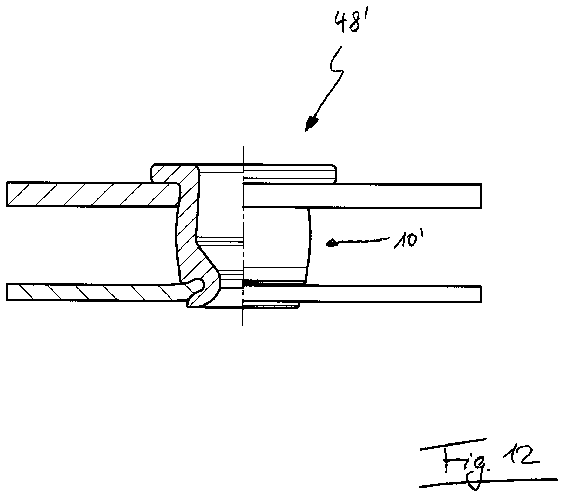

Fig. 9 lässt dahingegen erkennen, dass anstelle der Stufen S1, S2 des Elements 10 eine Schräge Z (vgl. Längsschnitt links der Achse A) vorgesehen ist. Das Element 10' erfordert keinen Stempel 40, wie den Fig. 10 und 11 zu entnehmen ist. Das durch den in den Fig. 10 und 11 gezeigten Setzprozess erhaltene Zusammenbauteil 48' ist in Fig. 12 gezeigt.

Die Umformung des Abschnitts 16 erfolgt auch hier, wenn die der Setzbewegung E entgegengesetzte Kraft (z.B. durch die Umformung des Nietabschnitts 18 erzeugt) die Stabilität der Wand des Umformabschnitts 16 übersteigt. Ein Knick K zwischen der ansonsten zylindrischen Innenwand des Abschnitts 16 und der Schräge Z bildet funktionell eine Schwächezone, die das Einsetzen der Aufweitung bestimmt. Die Geometrie der Schräge Z (z.B. Neigung, axiale Position, ...) und die Wandstärke ein einem axial oberhalb der Schräge Z liegenden Bereich bilden somit eine Art Umformeinrichtung, die ohne zusätzlichen Stempel die gewünschte Aufweitung erzeugt, wenn ein Schwellwert einer axialen Belastung überschritten wird.

Da auf einen Stempel verzichtet werden kann, eignet sich das Konzept des Elements 10' gut für Bolzenelemente. Bei diesen kann sich ein Bolzenabschnitt des Elements von dem Anlageabschnitt 12 aus nach oben in eine zentrale Öffnung O' des Setzkopfes 39 ragen.

### Bezugszeichenliste

- 10, 10': Befestigungselement
- 11: Flanschfläche
- 12, 14: Anlageabschnitt
- 16: Umformabschnitt
- 18: Nietabschnitt
- 20,22: Anlagefläche
- 24, 32: Fase
- 26: Ringnut
- 27: Rippe
- 28: zylindrischer Grundkörper
- 30: Endabschnitt
- 34: Werkstück
- 34A, 34B: Werkstückkomponente
- 36A, 36B: Loch
- 38: Setzeinrichtung
- 39: Setzkopf
- 40: Stempel
- 42: Stempelfläche
- 44: Matrize
- 46: Ausbuchtung
- 48, 48': Zusammenbauteil

- A: Längsachse
- O, O': zentrale Öffnung
- D: Abstand
- S1, S2: Stufe
- B: Gewindebereich
- E: Setzbewegung
- Z: Schräge
- K: Knick

## Patentansprüche

1. Befestigungselement (10) zur Befestigung an einem Werkstück (34), das zumindest ein erstes Werkstückelement (34A) mit einer ersten Öffnung (36A) und ein zweites Werkstückelement (34B) mit einer mit der ersten Öffnung (36A) fluchtenden zweiten Öffnung (36B) umfasst,
wobei das Befestigungselement (10) einen ersten Anlageabschnitt (12) mit einer erste Anlagefläche (20) zur Anlage an einem die erste Öffnung (36A) umgebenden Bereichs des ersten Werkstückelements (34A) und einen zweiten Anlageabschnitt (14) mit einer zweite Anlagefläche (22) zur Anlage an einem die zweite Öffnung (36B) umgebenden Bereichs des zweiten Werkstückelements (34B) aufweist, wobei der Bereich des zweiten Werkstückelements (34B) dem ersten Werkstückelement (34A) zugewandt ist und wobei das erste und das zweite Werkstückelement (34A, 34B) zumindest in den die erste und die zweite Öffnungen (36A, 36B) umgebenden Bereichen beabstandet, insbesondere parallel beabstandet voneinander angeordnet sind, wobei der erste Anlageabschnitt (12) und der zweite Anlageabschnitt (14) mittels eines sich in einer Längsrichtung des Befestigungselements (10) erstreckenden Umformabschnitts (16) miteinander verbunden sind und wobei sich ein Nietabschnitt (18) von dem zweiten Anlageabschnitt (14) in einer von dem Umformabschnitt (16) abgewandten Richtung erstreckt,
wobei der Umformabschnitt (16) eine Umformeinrichtung aufweist, die derart ausgestaltet ist, dass eine in axialer Richtung wirkende Kraft in eine Aufweitung des Umformabschnitts (16) umsetzbar ist, und
wobei die Umformeinrichtung in einem sich in Längsrichtung erstreckenden Hohlraum des Umformabschnitts (16) angeordnet ist,
**dadurch gekennzeichnet,**
**dass** die Umformeinrichtung zumindest eine Stufe (S1) umfasst, die derart ausgestaltet und angeordnet ist, dass sie zur Aufweitung des Umformabschnitts (16) mit einem Stempel (40) einer Setzeinrichtung (38) zusammenwirkt.

2. Befestigungselement nach Anspruch 1,
wobei der Umformabschnitt (16) und/oder der Nietabschnitt (18) in einem Querschnitt senkrecht zu der Längsrichtung im Wesentlichen symmetrisch, insbesondere kreisförmig ausgebildet sind, und/oder wobei der Umformabschnitt (16) und/oder der Nietabschnitt (18) koaxial angeordnet sind.

3. Befestigungselement nach einem der vorstehenden Ansprüche,
wobei der zweite Anlageabschnitt (14) an einem dem ersten Anlageabschnitt (12) abgewandten axialen Ende des Umformabschnitts (16) ausgebildet ist.

4. Befestigungselement nach einem der vorstehenden Ansprüche,
wobei ein Außenumfang des Nietabschnitts (18) kleiner ist als ein Außenumfang des Umformabschnitts (16) und/oder dass eine Längserstreckung des Nietabschnitts kleiner ist als eine Längserstreckung des Umformabschnitts (16).

5. Befestigungselement nach einem der vorstehenden Ansprüche, wobei die Umformeinrichtung eine Schwächezone aufweist.

6. Befestigungselement nach einem der vorstehenden Ansprüche,
wobei der erste Anlageabschnitt (12), der Umformabschnitt (16), der zweite Anlageabschnitt (14) und/oder der Nietabschnitt (18) einen sich in Längsrichtung erstreckenden Hohlraum aufweisen, insbesondere wobei der jeweilige Hohlraum den ihm zugeordneten Abschnitt durchquert und/oder wobei die Hohlräume miteinander fluchten.

7. Befestigungselement nach einem der vorstehenden Ansprüche,
wobei die erste und/oder die zweite Anlagefläche (22) zumindest ein Verdrehsicherungsmerkmal aufweisen, insbesondere eine oder mehrere sich in radialer Richtung erstreckende Rippen (27), und/oder wobei eine Außenseite des Umformabschnitts (16) und/oder eine Außenseite des Nietabschnitts (18) zumindest ein Verdrehsicherungsmerkmal aufweisen, insbesondere eine oder mehrere sich in axialer Richtung erstreckende Rippen (27).

8. Zusammenbauteil, umfassend:
- ein Werkstück, das zumindest ein erstes Werkstückelement (34A) mit einer ersten Öffnung (36A) und ein zweites Werkstückelement (36B) mit einer mit der ersten Öffnung (36A) fluchtenden zweiten Öffnung (36B) umfasst, wobei das erste und das zweite Werkstückelement (34A, 34B) zumindest in einem jeweiligen die erste und die zweite Öffnungen (36A, 36B) umgebenden Bereich beabstandet, insbesondere parallel beabstandet voneinander angeordnet sind und wobei der Bereich des zweiten Werkstückelements (34B) dem ersten Werkstückelement (34A) zugewandt ist, und
- ein Befestigungselement (10) nach einem der vorstehenden Ansprüche, wobei der Umformabschnitt (16) zumindest abschnittsweise derart aufgeweitet ist, dass das erste Werkstückelement (34A) zwischen der ersten Anlagefläche (20) und der Aufweitung des Umformabschnitts (16) geklemmt ist, und
wobei der Nietabschnitt (18) zumindest abschnittsweise derart aufgeweitet ist, dass das zweite Werkstückelement (34B) zwischen der zweiten Anlagefläche (22) und der Aufweitung des Nietabschnitts (18) geklemmt ist.

9. Zusammenbauteil nach Anspruch 8,
wobei die zweite Öffnung (36B) kleiner ist als die erste Öffnung (36A).

10. Zusammenbauteil nach Anspruch 8 oder 9,
wobei der Abstand (D) des die erste Öffnung (36A) umgebenden Bereichs des ersten Werkstückelements (34A) von dem die zweite Öffnung (36B) umgebenden Bereichs des zweiten Werkstückelements (34B) kleiner ist als eine Längserstreckung des Umformabschnitts (16) vor Befestigung des Befestigungselements (10) an dem Werkstück.

11. Verfahren zur Herstellung eines Zusammenbauteils gemäß zumindest einem der Ansprüche 8 bis 10, wobei das Befestigungselement (10) mittels einer Setzeinrichtung (38) durch eine Setzbewegung (E), die zumindest eine ersten Bewegungsphase und eine zweite Bewegungsphase umfasst, in Längsrichtung des Befestigungselements (10) zunächst in die Öffnung (36A) des ersten Werkstückelements (34A) und anschließend in die Öffnung (36B) des zweiten Werkstückelements (34B) eingebracht wird, wobei der Nietabschnitt (18) während der ersten Bewegungsphase mit einer Matrize (44) zusammenwirkt, um den Nietabschnitt (18) aufzuweiten, wobei die Matrize (44) auf der dem ersten Werkstückelement (34A) abgewandten Seite des zweiten Werkstückelements (34B) angeordnet ist, und wobei während der zweiten Bewegungsphase eine Aufweitung des Umformabschnitts (16) bewirkt wird, insbesondere wobei die Aufweitung durch eine axiale Stauchung des Umformabschnitts (16) bewirkt wird, insbesondere wobei die Aufweitung des Umformabschnitts (16) und die Aufweitung des Nietabschnitts (18) zeitlich versetzt erfolgen und/oder die erste und die zweite Bewegungsphase zeitlich versetzt sind,
**dadurch gekennzeichnet,**
**dass** die Setzeinrichtung (38) einen Stempel (40) aufweist, der in den sich in Längsrichtung erstreckenden Hohlraum des Umformabschnitts (16) ragt und der zur Aufweitung des Umformabschnitts (16) mit der Umformeinrichtung zusammenwirkt.

12. Verfahren nach Anspruch 11,
wobei die erste und die zweite Bewegungsphase derart aufeinander abgestimmt sind, dass die Aufweitung des Umformabschnitts (16) erst einsetzt, nachdem die Aufweitung des Nietabschnitts (18) begonnen hat oder diese abgeschlossen ist und/oder nachdem die zweite Anlagefläche (22) in Anlage mit dem die zweite Öffnung (36B) umgebenden Bereichs des zweiten Werkstücks gebracht wurde.

13. Verfahren nach Anspruch 11 oder 12,
wobei die Umformeinrichtung zumindest eine Stufe (S1, S2) umfasst, die zur Aufweitung des Umformabschnitts (16) mit dem Stempel (40) zusammenwirkt, insbesondere über eine an dem Stempel (40) ausgebildete Schräge (Z) oder konisch geformten Stempelfläche (42).

14. Verfahren nach Anspruch 11, 12 oder 13,
wobei der Stempel (40) relativ zu einem mit dem ersten Anlageabschnitt (12) zusammenwirkenden Abschnitt der Setzeinrichtung (38) in Längsrichtung des Befestigungselements (10) verfahren wird, um die zweite Bewegungsphase zu bewirken.

## Claims

1. A fastening element (10) for fastening to a workpiece (34), said fastening element (10) comprising at least a first workpiece element (34A) having a first opening (36A) and a second workpiece element (34B) having a second opening (36B) aligned with the first opening (36A),
wherein the fastening element (10) has a first contact section (12) having a first contact surface (20) for contact with a region of the first workpiece element (34A) surrounding the first opening (36A) and a second contact section (14) having a second contact surface (22) for contact with a region of the second workpiece element (34B) surrounding the second opening (36B), wherein the region of the second workpiece element (34B) faces the first workpiece element (34A), and wherein the first workpiece element and the second workpiece element (34A, 34B) are arranged spaced apart from one another, in particular spaced apart in parallel from one another, at least in the regions surrounding the first and second openings (36A, 36B), with the first contact section (12) and the second contact section (14) being connected to one another by means of a reshaping section (16) extending in a longitudinal direction of the fastening element (10), and with a rivet section (18) extending from the second contact section (14) in a direction facing away from the reshaping section (16),
wherein the reshaping section (16) has a reshaping device which is designed such that a force acting in an axial direction can be converted into a widening of the reshaping section (16), and
wherein the reshaping device is arranged in a hollow space of the reshaping section (16) extending in the longitudinal direction,
**characterized in that**
the reshaping device comprises at least one step (S1) which is designed and arranged such that it cooperates with a punch (40) of a setting device (38) to widen the reshaping section (16).

2. A fastening element according to claim 1,
wherein the reshaping section (16) and/or the rivet section (18) is/are formed substantially symmetrically, in particular in the shape of a circle, in a cross-section perpendicular to the longitudinal direction, and/or wherein the reshaping section (16) and/or the rivet section (18) is/are arranged coaxially.

3. A fastening element according to one of the preceding claims,
wherein the second contact section (14) is formed at an axial end of the reshaping section (16) remote from the first contact section (12).

4. A fastening element according to any one of the preceding claims,
wherein an outer periphery of the rivet section (18) is smaller than an outer periphery of the reshaping section (16); and/or in that a longitudinal extent of the rivet section is smaller than a longitudinal extent of the reshaping section (16).

5. A fastening element according to any one of the preceding claims, wherein the reshaping device has a weakness zone.

6. A fastening element according to any one of the preceding claims,
wherein the first contact section (12), the reshaping section (16), the second contact section (14) and/or the rivet section (18) has/have a hollow space extending in the longitudinal direction, in particular wherein the respective hollow space passes through the section associated with it, and/or wherein the hollow spaces are aligned with one another.

7. A fastening element according to any one of the preceding claims,
wherein the first and/or the second contact surface (22) has/have at least one feature providing security against rotation, in particular one or more ribs (27) extending in a radial direction, and/or wherein an outer side of the reshaping section (16) and/or an outer side of the rivet section (18) has/have at least one feature providing security against rotation, in particular one or more ribs (27) extending in the axial direction.

8. A component assembly, comprising:
- a workpiece which comprises at least a first workpiece element (34A) having a first opening (36A) and a second workpiece element (34B) having a second opening (36B) aligned with the first opening (36A), wherein the first workpiece element and the second workpiece element (34A, 34B) are arranged spaced apart from one another, in particular spaced apart in parallel from one another, at least in a respective region surrounding the first and second openings (36A, 36B), and wherein the region of the second workpiece element (34B) faces the first workpiece element (34A); and
- a fastening element (10) according to any one of the preceding claims, wherein the reshaping section (16) is at least sectionally widened such that the first workpiece element (34A) is clamped between the first contact surface (20) and the widened portion of the reshaping section (16), and
wherein the rivet section (18) is at least sectionally widened such that the second workpiece element (34B) is clamped between the second contact surface (22) and the widened portion of the rivet section (18).

9. A component assembly according to claim 8,
wherein the second opening (36B) is smaller than the first opening (36A).

10. A component assembly according to claim 8 or 9,
wherein the spacing (D) of the region of the first workpiece element (34A) surrounding the first opening (36A) from the region of the second workpiece element (34B) surrounding the second opening (36B) is smaller than a longitudinal extent of the reshaping section (16) before the fastening of the fastening element (10) to the workpiece.

11. A method of manufacturing a component assembly according to at least one of the claims 8 to 10, wherein the fastening element (10) is introduced in the longitudinal direction of the fastening element (10) first into the opening (36A) of the first workpiece element (34A) and then into the opening (36B) of the second workpiece element (34B) by means of a setting device (38) by a setting movement (E) that comprises at least a first movement phase and a second movement phase, wherein the rivet section (18) cooperates with a die (44) during the first movement phase in order to widen the rivet section (18), wherein the die (44) is arranged at the side of the second workpiece element (34B) remote from the first workpiece element (34A), and wherein a widening of the reshaping section (16) is brought about during the second movement phase, in particular wherein the widening is brought about by an axial compression of the reshaping section (16), in particular wherein the widening of the reshaping section (16) and the widening of the rivet section (18) take place offset in time and/or the first movement phase and the second movement phase are offset in time, **characterized in that**
the setting device (38) has a punch (40) which projects into the hollow space of the reshaping section (16) extending in the longitudinal direction and which cooperates with the reshaping device in order to widen the reshaping section (16).

12. A method according to claim 11,
wherein the first movement phase and the second movement phase are coordinated with one another such that the widening of the reshaping section (18) only starts after the widening of the rivet section (18) has started or has been completed and/or after the second contact surface (22) has been brought into contact with the region of the second workpiece surrounding the second opening (36B)

13. A method according to claim 11 or 12,
wherein the reshaping device comprises at least one step (S1, S2) which cooperates with the punch (40), in particular via a slope (Z) formed at the punch (40) or a conically shaped punch surface (42), in order to widen the reshaping section (16).

14. A method according to claim 11, 12 or 13,
wherein the punch (40) is moved relative to a section of the setting device (38) cooperating with the first contact section (12) in the longitudinal direction of the fastening element (10) in order to bring about the second movement phase.

## Revendications

1. Élément de fixation (10) destiné à fixer une pièce à oeuvrer (34), qui comprend au moins un premier élément de pièce à oeuvrer (34A) avec une première ouverture (36A) et un second élément de pièce à oeuvrer (34B) avec une seconde ouverture (36B) en alignement avec la première ouverture (36A),
dans lequel l'élément de fixation (10) présente une première section de contact (12) avec une première surface de contact (20) pour venir en contact avec une zone, entourant la première ouverture (36A), du premier élément de pièce à oeuvrer (34A), et une seconde section de contact (14) avec une seconde surface de contact (22) pour venir en contact avec une zone, entourant la seconde ouverture (36B), du second élément de pièce à oeuvrer (34B), dans lequel la zone du second élément de pièce à oeuvrer (34B) est tournée vers le premier élément de pièce à oeuvrer (34A), et dans lequel le premier et le second élément de pièce à oeuvrer (34A, 34B) sont agencés à distance l'un de l'autre, en particulier en parallèle et à distance l'un de l'autre, au moins dans la zone entourant la première et la seconde ouverture (36A, 36B), dans lequel la première section de contact (12) et la seconde section de contact (14) sont reliées l'une à l'autre au moyen d'une section de déformation (16) s'étendant dans une direction longitudinale de l'élément de fixation (10), et dans lequel une section de rivetage (18) s'étend depuis la seconde section de contact (14) dans une direction détournée de la section de déformation (16),
dans lequel la section de déformation (16) présente un système de déformation qui est conçu de telle sorte qu'une force agissant dans une direction axiale peut être mise en oeuvre dans un élargissement de la section de déformation (16), et
dans lequel le système de déformation est agencé dans une cavité, s'étendant dans une direction longitudinale, de la section de déformation (16),
**caractérisé en ce que**
le système de déformation comprend au moins un palier (S1) qui est conçu et agencé de manière à coopérer avec un poinçon (40) d'un système d'insertion (38) pour élargir la section de déformation (16).

2. Élément de fixation selon la revendication 1,
dans lequel la section de déformation (16) et/ou la section de rivetage (18) sont réalisées de manière sensiblement symétrique, en particulier circulaire, dans une section transversale perpendiculaire à la direction longitudinale, et/ou dans lequel la section de déformation (16) et/ou la section de rivetage (18) sont agencées de manière coaxiale.

3. Élément de fixation selon l'une quelconque des revendications précédentes,
dans lequel la seconde section de contact (14) est réalisée au niveau d'une extrémité axiale, détournée de la première section de contact (12), de la section de déformation (16).

4. Élément de fixation selon l'une quelconque des revendications précédentes,
dans lequel une circonférence extérieure de la section de rivetage (18) est plus petite qu'une circonférence extérieure de la section de déformation (16) et/ou une extension longitudinale de la section de rivetage est plus petite qu'une extension longitudinale de la section de déformation (16).

5. Élément de fixation selon l'une quelconque des revendications précédentes,
dans lequel le système de déformation présente une zone d'affaiblissement.

6. Élément de fixation selon l'une quelconque des revendications précédentes,
dans lequel la première section de contact (12), la section de déformation (16), la seconde section de contact (14), et/ou la section de rivetage (18) présentent une cavité s'étendant dans la direction longitudinale, en particulier dans lequel la cavité respective traverse la section qui est lui associée et/ou dans lequel les cavités sont alignées les unes avec les autres.

7. Élément de fixation selon l'une quelconque des revendications précédentes,
dans lequel la première et/ou la seconde surface de contact (22) présentent au moins un élément anti-torsion, en particulier une ou plusieurs ailettes (27) s'étendant dans une direction axiale, et/ou dans lequel un côté extérieur de la section de déformation (16) et/ou un côté extérieur de la section de rivetage (18) présentent au moins un élément anti-torsion, en particulier une ou plusieurs ailettes (27) s'étendant dans une direction axiale.

8. Composant d'assemblage, comprenant :
- une pièce à oeuvrer (34), qui comprend au moins un premier élément de pièce à oeuvrer (34A) avec une première ouverture (36A) et un second élément de pièce à oeuvrer (34B) avec une seconde ouverture (36B) en alignement avec la première ouverture (36A), dans lequel le premier et le second élément de pièce à oeuvrer (34A, 34B) sont agencés, à distance l'un de l'autre, en particulier en parallèle et à distance l'un de l'autre, au moins dans une zone entourant respectivement la première et la seconde ouverture (36A, 36B), et dans lequel la zone du second élément de pièce à oeuvrer (34B) est tournée vers le premier élément de pièce à oeuvrer (34A), et
- un élément de fixation (10) selon l'une quelconque des revendications précédentes, dans lequel la section de déformation (16) est élargie au moins en partie de telle sorte que le premier élément de pièce à oeuvrer (34A) est serrée entre la première surface de contact (20) et l'élargissement de la section de déformation (16), et
dans lequel la section de rivetage (18) est élargie au moins en partie de telle sorte que le second élément de pièce à oeuvrer (34B) est serré entre la seconde surface de contact (22) et l'élargissement de la section de rivetage (18).

9. Composant d'assemblage selon la revendication 8,
dans lequel la seconde ouverture (36B) est plus petite que la première ouverture (36A).

10. Composant d'assemblage selon la revendication 8 ou 9,
dans lequel la distance (D) de la zone, entourant la première ouverture (36A), du premier élément de pièce à oeuvrer (34A), et de la zone, ), laquelle entourant la seconde ouverture (36B), du second élément de pièce à oeuvrer (34B) est plus petite qu'une extension longitudinale de la section de déformation (16) avant fixation de l'élément de fixation (10) à la pièce à oeuvrer.

11. Procédé de fabrication d'un composant d'assemblage selon l'une au moins des revendications 8 à 10, dans lequel l'élément de fixation (10) est introduit au moyen d'un système d'insertion (38) par un mouvement d'insertion (E) qui comprend au moins une première phase de mouvement et une seconde phase de mouvement, dans une direction longitudinale de l'élément de fixation (10) tout d'abord dans l'ouverture (36A) du premier élément de pièce à oeuvrer (34A) et ensuite dans l'ouverture (36B) du second élément de pièce à oeuvrer (34B), dans lequel la section de rivetage (18) coopère avec une matrice (44) pendant la première phase de mouvement afin d'élargir la section de rivetage (18), dans lequel la matrice (44) est agencée sur le côté, détourné du premier élément de pièce à oeuvrer (34A), du second élément de pièce à oeuvrer (34B), et dans lequel, pendant la seconde phase de mouvement, un élargissement de la section de déformation (16) est exécuté, en particulier dans lequel l'élargissement est exécuté par emmanchement axial de la section de déformation (16), en particulier dans lequel l'élargissement de la section de déformation (16) et l'élargissement de la section de rivetage (18) s'effectuent de façon décalée dans le temps et/ou la première et la seconde phase de mouvement sont décalées dans le temps,
**caractérisé en ce que**
le système d'insertion (38) présente un poinçon (40) qui s'enfonce dans la cavité, s'étendant dans une direction longitudinale, de la section de déformation (16) et qui coopère avec le système de déformation pour élargir la section de déformation (16).

12. Procédé selon la revendication 11,
dans lequel la première et la seconde phase de mouvement sont coordonnées l'une et l'autre de telle sorte que l'élargissement de la section de déformation (16) intervient seulement après que l'élargissement de la section de rivetage (18) a commencé ou que celui-ci est terminé et/ou après que la seconde surface de contact (22) a été amenée en contact avec la zone, entourant la seconde ouverture (36B), de la seconde pièce à oeuvrer.

13. Procédé selon la revendication 11 ou 12,
dans lequel le système de déformation comprend au moins un palier (S1, S2) qui coopère avec le poinçon (40) pour élargir la section de déformation (16), en particulier par l'intermédiaire d'une inclinaison (Z) formée au niveau du poinçon (40) ou une surface de poinçon de forme conique (42).

14. Procédé selon la revendication 11, 12 ou 13,
dans lequel le poinçon (40) est déplacé dans une direction longitudinale de l'élément de fixation (10) relativement à une section, coopérant avec la première section de contact (12), du système d'insertion (38) pour exécuter la seconde phase de mouvement.
